# EUROPÄISCHE PATENTANMELDUNG

(11) **EP 1 285 580 A1**
(43) Veröffentlichungstag der Anmeldung: **26.02.2003**
(21) Anmeldenummer: 02450178.5
(22) Anmeldetag: 21.08.2002
(51) Int. Cl.: A01N 65/00

(54) **Zumindest einen Pflanzeninhaltsstoff der Gattung Aesculus umfassende chemische Zusammensetzung als Lockstoff für Kastanienschädlinge**

(30) Priorität: 22.08.2001 AT 13282001
(71) Anmelder: Innovationsagentur Gesellschaft m.b.H., 1020 Wien (AT); Harand, Wolfgang, 1230 Wien (AT)
(72) Erfinder: Harand, Wolfgang, 1230 Wien (AT)
(74) Vertreter: Pawloy, Peter Michael, Dipl.-Ing.

(57) **Zusammenfassung**

Es wird die Verwendung einer chemischen Zusammensetzung umfassend zumindest einen Inhaltsstoff aus einem Pflanzenteil einer Art der Gattung Aesculus als Lockstoff für Kastanienschädlinge zur Verfügung gestellt sowie eine Vorrichtung zum Anlocken von Kastanienschädlingen und ein Verfahren zum Schutz vor Befall von Bäumen durch Kastanienschädlinge.

## Beschreibung

Die vorliegende Erfindung betrifft die Verwendung einer chemischen Zusammensetzung als Lockstoffe für Kastanienschädlinge, eine Vorrichtung zum Anlocken von Kastanienschädlingen, eine Massenfangfalle sowie ein Verfahren zum Schutz von Kastanien vor Befall durch Schädlinge.

Die Kastanienminiermotte Cameraria ohridella Deschka & Dimic (Lepidoptera: Gracillariidae) gehört zu den Insekten und befällt seit etwa 1985 Rosskastanien in Europa. Seit etwa 1989 befällt die Kastanienminiermotte massiv die Rosskastanien Österreichs, wobei sich auf Grund fehlender natürlicher Antagonisten diese Motte rasch ausbreitet und die Zahl der befallenen Bäume rasant ansteigt.

Bisherige Strategien zur Bekämpfung erwiesen sich als wenig geeignet: In kleinem Umfang kam das breit wirksame Insektizid Diflubenzuron zum Einsatz. Allerdings ist diese Bekämpfung teuer und kann deshalb nicht als generelle Strategie eingesetzt werden. Die Überwinterungsgeneration kann durch Verbrennen des Falllaubes dezimiert werden. Auch das bedeutet allerdings einen erheblichen Aufwand und kann nicht im erforderlichen flächendeckenden Ausmaß durchgeführt werden.

In der WO 01/00553 A1 wird das Sexualpheromon der Kastanienminiermotte beschrieben, welches zum selektiven Fang der männlichen Population eingesetzt werden kann. Da aber der Schaden durch die Weibchen verursacht wird und die Männchen nur teilweise gefangen werden können, ist die Eignung für die praktische Bekämpfung gering.

Die Aufgabe der vorliegenden Erfindung besteht somit darin, einen Lockstoff für Kastanienschädlinge, insbesondere der weiblichen Kastanienminiermotte zur Verfügung zu stellen, um somit beispielsweise als Massenfangfallen entweder alleine oder in Kombination mit anderen Mitteln den weiteren Befall von Bäumen durch Kastanienschädlinge zu reduzieren bzw. zu verhindern.

Diese Aufgabe wird durch die Verwendung einer chemischen Zusammensetzung umfassend zumindest einen Inhaltsstoff aus einem Pflanzenteil einer Art der Gattung Aesculus als Lockstoff für Kastanienschädlinge gelöst. Überraschenderweise locken Inhaltsstoffe aus einem Pflanzenteil einer Art der Gattung Aesculus Kastanienschädlinge an.

Inhaltsstoffe von Blättern der Rosskastanien (Aesculus hippocastanum L., Hippocastanaceae) können für verschiedene medizinische und pharmazeutische Zwecke eingesetzt werden. Beispielsweise betrifft die RO 21 06 875 die Behandlung von verschiedenen Krankheiten mit Extrakten aus Blättern der Rosskastanie. In der EP 1 020 192 wird Rosskastanienextrakt gegen das Auftreten von Cellulitis eingesetzt. Darüber hinaus wurden Inhaltsstoffe von Samen aus Rosskastanien in AT 401 456 B als Deterrents gegen landbewohnende Schnecken beschrieben.

Es wurde jedoch im Stand der Technik weder beschrieben noch nahegelegt, dass diese Inhaltsstoffe einer Art der Gattung Aesculus zur Anlockung von Kastanienschädlingen verwendet werden können.

Im Rahmen der vorliegenden Erfindung ist als "Pflanzenteil" jegliches Teil einer Art der Gattung Aesculus zu verstehen, etwa Blätter, die Rinde, die Samen, insbesondere die Laubblätter, wobei auch Inhaltsstoffe von zwei oder mehreren Pflanzenteilen verwendet werden können.

Die Gattung Aesculus gehören zu den Rosskastaniengewächsen (Hippocastanaceae), die in der nördlich gemäßigten Zone wachsen. Für die erfindungsgemäße Zusammensetzung können sowohl Inhaltsstoffe von Pflanzenteilen junger, wenige Monate alter Individuen als auch alter, zehn oder mehr Jahre alten Individuen verwendet werden. Alternativ dazu können die Inhaltsstoffe auch chemisch-synthetisch hergestellt werden, z.B. auch durch Derivatisierung von anderen Naturstoffen.

Der Begriff "Kastanienschädlinge" umfasst im Rahmen der vorliegenden Anmeldung alle Arten von Schädlingen an Kastanien, etwa Milben, Läuse, Motten, u.ä, vorzugsweise ist der Schädling die Kastanienminiermotte. Diese Motten erzeugen Minen, Hohlräume, die durch Minierfraß in parenchymführenden Pflanzenteilen entstanden sind. Die Weibchen legen ihre Eier auf das pflanzliche Gewebe. Die Larven fressen sich durch das Gewebe und verursachen dadurch Gänge, die den Schaden an den Bäumen darstellen.

Unter "Lockstoff" wird im Rahmen der vorliegenden Anmeldung jeglicher Inhaltsstoff aus einem Pflanzenteil einer Art der Gattung Aesculus verstanden, der Kastanienschädlinge anlockt. Um einen Inhaltsstoff auf dessen Fähigkeit Kastanienschädlinge anzulocken zu prüfen, stehen verschiedene Tests zur Verfügung, u.a. Olfaktometerstudien und das Elektroantennogramm:
a) Olfaktometerstudien sind im Wesentlichen ein Choicetest, bei dem sich die Tiere gegen einen schwachen Luftstrom bewegen, der mit dem vermeintlichen Lockstoff angereichert ist. Der Luftstrom teilt sich aus der Sicht der Tiere nach kurzer Strecke in zwei Teile, einmal mit dem zu testenden Inhaltsstoff und einmal ohne. Durch die Entscheidung der Kastanienschädlinge für eine der Richtungen kann die Wirkung des Inhaltsstoffes als Lockstoff bestätigt oder verneint werden.
b) Beim Elektroantennogramm werden die Antennen der Kastanienschädlinge, die als Fühler sowie Geruchsorgane der Insekten dienen, mit Elektroden versehen, welche die Nervensignale abnehmen. Wirkt ein Inhaltsstoff als Signal, so kann die dadurch ausgelöste Nervenreizung gemessen werden. Es kann direkt die Information abgeleitet werden, ob ein Inhaltsstoff von einer Blattminiermotte wahrgenommen wird oder nicht.

Die chemische Zusammensetzung kann je nach Anwendung eine geringe oder hohe Konzentration des Inhaltsstoffes bzw. der Kombination von zwei oder mehr Inhaltsstoffen umfassen, wobei die attraktive bzw. anlockende Wirkung Konzentrations-abhängig ist, wobei die Attraktivität mit zunehmender Konzentration steigt.

Die chemische Zusammensetzung kann selbstverständlich weitere chemische Stubstanzen umfassen, die gängig sind und dem Fachmann auf dem Gebiet des Pflanzenschutzes durchaus bekannt sind, etwa akzeptable Träger, Konservierungsmittel, Verdünnungsmittel etc.

Mit Hilfe dieser chemischen Zusammensetzung umfassend zumindest einen Inhaltsstoff aus einer Art der Gattung Aesculus können die Kastanienschädlinge von den jeweiligen Arten der Gattung Aesculus weggelockt werden, so dass ein neuer bzw. weiterer Befall des jeweiligen Baumes effizient reduziert wird.

Vorzugsweise ist das Pflanzenteil ein Blatt einer Art der Gattung Aesculus. Es hat sich überraschenderweise herausgestellt, dass die Inhaltsstoffe aus den Blättern von Arten der Gattung Aesculus besonders reich an Lockstoffen für Kastanienschädlinge sind, so dass sich diese Inhaltsstoffe besonders gut für eine chemische Zusammensetzung, die als Lockstoff verwendet wird, eignen.

Besonders vorteilhaft ist die erfindungsgemäße Verwendung, wenn die Art der Gattung Aesculus Aesculus hippocastanum L. ist. Auf Inhaltsstoffe aus diesem Baum reagieren die Kastanienschädlinge besonders stark.

Vorzugsweise umfasst die chemische Zusammensetzung Extrakte des Pflanzenteils. Extrakte sind Stoffgemische, die durch Extraktion und teilweises oder sogar völliges Eindampfen der Extraktionslösung gewonnen werden. Je nach Pflanzenteil bzw. gewünschte Inhaltsstoffe können verschiedene dem Fachmann bekannte Lösungsmittel verwendet werden. Zum Erhalt von Inhaltsstoffen aus Blättern kann beispielsweise Laub püriert und mit Wasser verdünnt werden, wobei die festen Bestandteile vorzugsweise abfiltriert werden. Da der Extrakt eine ganze Reihe von Verbindungen des jeweiligen Pflanzenteils umfasst, weist eine chemische Zusammensetzung umfassend Extrakte eine große Ähnlichkeit mit dem natürlichen Pflanzenteil auf. Selbstverständlich wird unter dem Begriff "Extrakte" auch eine Kombination von bestimmten Stoffen aus dem Pflanzenteil-Extrakt verstanden.

Besonders günstig ist die Verwendung, wenn die chemische Zusammensetzung flüchtige Verbindungen des Pflanzenteils umfasst. Da die flüchtigen Verbindungen in die Gasphase übertreten können und somit weitreichend sind, eignen sich diese besonders gut als Lockstoffe für Kastanienschädlinge. Die Flüchtigkeit von Verbindungen ist von vielen Parametern abhängig und kann beispielsweise durch den Verdunstungskoeffizienten, Dampfdruck oder die Verdunstungszahl angegeben werden. Die flüchtigen Verbindungen umfassen beispielsweise ätherische Öle und Riechstoffe.

Von Vorteil ist weiters, wenn die chemische Zusammensetzung eine oder mehrere Substanzen, ausgewählt aus der Gruppe bestehend aus Isoamylacetat oder 2-Pentanolacetat, Essigsäure-pentylester, Hexansäure-methylester, 1-Pentanol, Hexansäureethylester, 2-Hexen-1-ol-Acetat, 6-Methyl-Hept-5-en-2-on, Essigsäure, 3-Hexenylbutanoat, 3-Hexenyl-2-Methyl-butanoat, Benzaldehyd, beta-Pinen (6,6-dimethyl-2-methylen-bicyclo [3.1.1]heptan), Hexansäurehexylester, Trans-3-Caryophyllen (4,11,11-trimethyl-8-methylenbicyclo[7.2.0]undec-4-en, Hexansäurehexenylester, beta-Farnesen (7,11-dimethyl-3-methylen-dodeca-1,6,10-trien), Trans-2-Hexenylbutanoat, Geranylaceton II (5,6-Undecadien-2-on), Benzenmethanol, Benzenethanol, Hexanal, 3-Hexenal, 2-Peneten-1-ol, 2-Hexenal, Essigsäurehexylester, Cis-3-Hexenylacetat, 1-Hexanol, 3-Hexen-1-ol, 1,4-Hexadien, 4-Hexen-3-on oder 3,4-Dihydro-Pyran-2-Carboxaldehyd oder 5,6-Dihydro-Pyran-2-Carboxaldehyd, 1-Hepten-3-ol oder 2-Penten-1-ol und 1H-Imidazol, umfasst. Diese Stoffe haben sich als besonders effiziente Lockstoffe erwiesen. Kastanienspezifisch sind dabei insbesondere 3-Hexenylbutanoat, 3-Hexenyl-2-Methyl-butanoat, beta-Pinen (6,6-dimethyl-2-methylenbicyclo[3.1.1]heptan), Trans-3-Caryophyllen (4,11,11-trimethyl-8-methylen-bicyclo[7.2.0]undec-4-en, beta-Farnesen (7,11-dimethyl-3-methylen-dodeca-1,6,10-trien), Geranylaceton II (5,6-Undecadien-2-on), Hexanal, 3-Hexenal, 2-Peneten-1-ol, 2-Hexenal, Essigsäurehexylester, Cis-3-Hexenylacetat, 1-Hexanol, 3-Hexen-1-ol, 1,4-Hexadien, 4-Hexen-3-on oder 3,4-Dihydro-Pyran-2-Carboxaldehyd oder 5,6-Dihydro-Pyran-2-Carboxaldehyd, 1-Hepten-3-ol oder 2-Penten-1-ol, 1H-Imidazol. Als ausgesprochen stark wirkende Lockstoffe haben sich dabei Isoamylacetat, 2-Pentanolacetat, Essigsäure-pentylester, Hexansäure-methylester, 1-Pentanol, Hexansäureethylester, 2-Hexen-1-ol-Acetat, 6-Methyl-Hept-5-en-2-on, Essigsäure, Benzaldehyd, Hexansäurehexylester, Hexansäurehexenylester, Trans-2-Hexenylbutanoat, Benzenmethanol, Benzenethanol herausgestellt. Dabei kann eine Substanz allein verwendet werden, aber auch Kombinationen von zwei oder mehr Substanzen, isoliert aus natürlichen Quellen oder synthetisch hergestellt.

Vorzugsweise umfasst die chemische Zusammensetzung weiters Klebstoff. Dadurch werden die Kastanienschädlinge durch die chemische Zusammensetzung nicht nur angelockt, sondern bleiben auch an der chemischen Zusammensetzung kleben. Der Klebstoff kann dabei jeglicher dem Fachmann bekannter Klebstoff in angemessener Konzentration sein. Wichtig ist dabei, dass der Klebstoff nicht die Lockwirkung der Inhaltsstoffe des Pflanzenteils mindert.

Weiters ist es vorteilhaft, wenn die chemische Zusammensetzung weitere Lockstoffe, insbesondere Pheromone, umfasst. Dabei können allgemein auf Insekten wirkende Lockstoffe eingesetzt werden oder auch Lockstoffe, die spezifisch für Kastanienschädlinge sind, beispielsweise das Pheromon gemäß der WO 01/00553 A1.

Weiters ist es günstig, wenn die chemische Zusammensetzung weiters Insektenregulatoren, vorzugsweise Insektizide, umfasst. Unter Insektenregulatoren werden im Rahmen der vorliegenden Anmeldung Stoffe verstanden, die die Entwicklung der Insekten beeinflussen (IGR-Insect Growth Regulators), wobei diese entweder die Insekten töten können oder auch in ihre Fortpflanzung sowie in biochemische Reaktionen des Insektenorganismus, die etwa für den Orientierungssinn, die Koordination etc. notwendig sind, eingreifen können. Dadurch werden die Kastanienschädlinge nachdem sie durch die chemische Zusammensetzung angelockt wurden, getötet oder zumindest soweit verändert, dass sie für die Bäume unschädlich sind. Selbstverständlich ist es möglich, dass die chemische Zusammensetzung zusätzlich den oben beschriebenen Klebstoff umfasst.

Vorzugsweise ist der Kastanienschädling Cameraria ohridella Deschka & Dimic. Diese Art gehört zu den Gracillariidae und ist die Ursache für den Befall der Rosskastanien in weiten Regionen Europas. Diese wird besonders stark durch die erfindungsgemäße chemische Zusammensetzung angelockt, wobei die Inhaltsstoffe vorzugsweise aus Aesculus hippocastanum (Rosskastanie) stammen, insbesondere aus dem Laubblatt. Durch eine solche chemische Zusammensetzung wird es nun erstmals möglich, den Befall der Rosskastanien großflächig und wirkungsvoll zu bekämpfen, da die erfindungsgemäße Zusammensetzung die Eiablage der Schädlinge induziert und ein Migrationsverhalten in Richtung der Quelle der Zusammensetzung auslöst.

Dabei ist die Verwendung besonders geeignet als Lockstoffe für weibliche Kastanienschädlinge. Es hat sich herausgestellt, dass die chemische Zusammensetzung auf weibliche Kastanienschädlinge, insbesondere der Cameraria ohridella, besonders gut wirkt. Da der eigentliche Schaden der Kastanienbäume durch befruchtete Weibchen angerichtet wird, stellt die chemische Zusammensetzung, wenn sie insbesondere als Lockstoffe für weibliche Kastanienschädlinge verwendet wird, eine ausgesprochen effektive Bekämpfungsmethode der Kastanienschädlinge dar. Dabei können zusätzlich weitere Substanzen enthalten sein, die spezifisch die weiblichen Insekten anlocken.

Besonders günstig ist die Verwendung in einer Massenfangfalle für Kastanienschädlinge. Diese Massenfangfallen können wie an sich bekannt ausgebildet sein, beispielsweise als Behälter in den die Insekten leicht gelangen können, jedoch die Flucht aus dem Behälter praktisch unmöglich ist. Dabei kann die Größe der Massenfangfalle je nach Notwendigkeit, insbesondere der Anzahl der in der Gegend vorhandenen Miniermotten, an die Art der Anwendung, angepasst werden.

Vorzugsweise wird die Kombination chemischer Verbindungen in einem Dispenser ausgebracht, der verschiedene, dem Fachmann bekannte Ausprägungen haben kann. Dabei kann die Abgabe flüchtiger Verbindungen durch eine Membran geeigneter Beschaffenheit reguliert werden. Der Dispenser kann beispielsweise entsprechend der Beschreibung in US 005308613 A ausgebildet sein. Die Kombination chemischer Verbindungen kann auch auf einem geeigneten Träger, beispielsweise hergestellt aus Zellulosefasern, Glasfasern, natürlichen oder synthetischen Polymeren oder Metallen aufgebracht werden. Dabei kann die Kombination chemischer Verbindungen auf der gesamten Fläche des Trägers aufgebracht sein, oder auch lediglich stellenweise, beispielsweise in der Mitte einer Scheibe.

Vorzugsweise wird die chemische Zusammensetzung auf einem geeigneten Träger, vorzugsweise hergestellt aus Zellulosefasern, Glasfasern, natürlichen oder synthetischen Polymeren bzw. Metallverbindungen, aufgebracht. Der Träger kann beispielsweise so gestaltet sein, dass er zur Eiablage oder lediglich zur einfacheren Handhabe der chemischen Zusammensetzung geeignet ist. Er kann beispielsweise als Scheibe oder Plättchen ausgebildet sein. Selbstverständlich kann auch Klebstoff auf den Träger aufgebracht werden, so dass die Insekten auf dem Träger kleben bleiben nachdem sie angelockt wurden. Die chemische Zusammensetzung kann auf der gesamten Fläche des Trägers aufgebracht sein, oder auch lediglich stellenweise, beispielsweise in der Mitte einer Scheibe, wobei am Scheibenumfang ein Klebstoff aufgebracht ist. Der Träger kann weiters in einer Massenfangfalle vorgesehen sein, so dass dieser leicht wieder ausgetauscht werden kann und die Massenfangfalle mit einem neu eingesetzten Träger wiederverwendet werden kann. Alternativ dazu kann die erfindungsgemäße Vorrichtung auch als Falle für das Monitoring weniger Tiere ausgestaltet sein, z.B. als Frühwarnsystem für nicht oder wenig belastete Gebiete.

Ein weiterer Aspekt der vorliegenden Erfindung betrifft eine Vorrichtung zum Anlocken von Kastanienschädlingen, insbesondere von Cameraria ohridella, wobei sie einen Träger umfasst auf dem eine erfindungsgemäße chemische Zusammensetzung wie oben beschrieben aufgebracht ist. Bei diesem Aspekt gelten die oben angeführten Definitionen und bevorzugten Ausführungsformen. Diese Vorrichtung dient insbesondere zum Anlocken von weiblichen Kastanienschädlingen. Dabei kann selbstverständlich in der Vorrichtung auch ein Klebstoff vorgesehen sein, so dass die angelockten Kastanienschädlinge kleben bleiben. Weiters kann die Vorrichtung auch zusätzliche Giftstoffe, insbesondere Insektizide umfassen, um die angelockten Kastanienschädlinge zu eliminieren.

Ein weiterer Aspekt der vorliegenden Anmeldung betrifft eine Massenfangfalle umfassend eine erfindungsgemäße Vorrichtung wie oben definiert. Auch hier gelten wiederum die obigen Definitionen und bevorzugten Ausführungsformen.

Ein weiterer Aspekt der vorliegenden Anmeldung betrifft ein Verfahren zum Schutz vor Kastanienschädlinge-Befall von Bäumen vorzugsweise von Arten der Gattung Aesculus, besonders bevorzugt von Aesculus hippocastanum L., wobei eine erfindungsgemäße chemische Zusammensetzung wie oben beschrieben bzw. eine erfindungsgemäße Vorrichtung wie oben beschrieben bzw. eine erfindungsgemäße Massenfangfalle wie oben beschrieben in der Nähe des jeweiligen Baumes vorzugsweise um dessen Stamm herum vorgesehen wird. Der Begriff "in der Nähe" ist im Rahmen der vorliegenden Anmeldung zu verstehen als in der Umgebung des Baumes, d.h. zwischen direkt angrenzend am Baum und im Umkreis von 50 m, vorzugsweise 20 m, besonders bevorzugt 10 m. Im Fall, dass die Zusammensetzung, Vorrichtung bzw. Massenfangfalle in der Umgebung des Baumes vorgesehen wird, sollte dies jedoch ausreichend nahe des Baumes sein, um die in der Nähe des Baumes vorhandenen Kastanienschädlinge anzulocken. Vorzugsweise wird die erfindungsgemäße Vorrichtung im Bereich unterhalb der Krone aufgestellt. Andererseits können diese auch direkt am Baum beispielsweise um den Stamm herum vorgesehen werden. Ziel des Verfahrens ist es, die Insekten von den Blättern des Baumes wegzulocken, so dass diese frei bleiben und es zu keinem Verlust an fotosynthetisch aktiver Fläche kommt.

Die vorliegende Erfindung wird nun anhand der nachfolgenden Beispiele näher erläutert, auf die sie jedoch nicht beschränkt sein soll.

### Beispiele

### 1. Gewinnung der Lockstoffe

500 g Laubblätter (Frischgewicht) von Aesculus hippocastanum L. (Hippocastanacea) wurden gesammelt und unter Zugabe von 500 ml Aqua deion, mit einem Küchenmixer stark zerkleinert. Zur Abtrennung der festen Bestandteile wurde der entstehende Brei vollständig durch ein feines Küchensieb gepresst. Diese wässrige Lösung diente als Ausgangsmaterial für die nachfolgenden Beispiele und wurde bis zur Verwendung bei -18°C gelagert.

### 2. Analysen der flüchtigen Verbindungen aus Blättern von Aesculus hippocastanum

### a) Analyse an intakten Laubblättern

2 unbefallene und unbeschädigte Laubblätter wurden mit einem Plastiksack aus PE umhüllt, der an der Basis mit Bindedraht dicht verschlossen wurde. Im so entstandenen abgeschlossenen Gasraum wurde eine SPME-Faser (Supelco Nr. 57348-U, 2 cm-50/30 µm DVB/Carboxen/(PDMS) 120 min. exponiert.

### b) Laboranalyse

Eine Headspace-Sampling Flasche (Perkin Elmer, 77 x 22 mm Außenmaße) wurde mit 1500 mg zerschnittenen unbefallenen und unbeschädigten Kastanienblättern befüllt und gasdicht verschlossen. Die SPME-Faser (wie Punkt a) wurde 60 min. exponiert.

### c) Analyse des Extraktes

1 ml des Extraktes aus Beispiel 1 wurden in eine Headspace-Sampling Flasche (wie in Punkt b) gefüllt und diese gasdicht verschlossen. Die SPME-Faser (wie in Punkt a) wurde in die Headspace-Sampling Flasche eingeführt und 30 min. exponiert.

### d) GC/MS-Messungen

Die GC/MS-Analysen wurden mit folgender Ausrüstung durchgeführt:
Gaschromatograph: Perkin Elmer AutoSystem XL
Massenspektrometer: Perkin Elmer Turbomass
Chromatographie-Säule: PE-WAX-Säule (Polyethylenglycol), 60 m Länge, 0,25 mm Innendurchmesser und 0,25 µm Schichtdicke

Die gesamte Trenndauer betrug 45 min. bei folgendem Temperaturprogramm: 3 min. 40°C; 6,0°/min. auf 120°C; 10,0°/min. auf 180°C; 20,0°/min. auf 220°C; 220°C konstant während 20,67 min.

Massenspektrometrische Analyse: Massenspektren (Ei + Ionisation bei 70 eV) wurden in einem Massebereich von 20-400 mit einer Cycletime von 1,10 s aufgenommen.
Von den in den Punkten a) bis c) beschriebenen Proben wurden jeweils drei Analysen durchgeführt.

### e) Identifikation der Verbindungen:

Die Verbindungen wurden durch Vergleich der Massenspektren mit folgenden Spektrenbibliotheken aufgeklärt:
- WILEY Registry of Mass Spectral Data, 6^{th} Edition on CD-ROM, Palisade Corporation and John Wiley & Sons, Inc.
- NIST/EPA/NIH Mass Spectral Database, Release May 1992, National Institute of Standards and Technology.
   Die Ergebnisse der Analysen sind in Tabelle 1 gezeigt.

### 3. Olfaktometer-Test

Zur Gewinnung der Puppen der Kastanienminiermotten (Cameraria ohridella Deschka & Dimic) wurden Blätter von stark befallenen Rosskastanien (Aesculus hippocastanum L.) gesammelt. Die Puppen wurden aus den Minen geholt und nach Geschlecht getrennt. Zur Verwendung kamen ausschließlich Weibchen. Sie wurden unter Langtagbedingungen (25°C bei 16/8 h Licht/Dunkelheit) zum Schlupfen gebracht und in einem Alter zwischen 12 h und 24 h für den Test verwendet.

Das Olfaktometer bestand aus einem Y-förmigen Glasrohr mit 3 gleich langen Schenkeln von jeweils 20 cm Länge und einem Innendurchmesser von 24 mm bei einer Glasstärke von 4 mm. Zur Aufgabe der Testsubstanzen diente an zwei Enden jeweils ein 10 cm langes Glasrohr mit gleichem Durchmesser, welches mit dem Ende des Y-Rohres gasdicht verschraubt wurde. Die Proberohre waren durch ein feines Netz (0,8 mm Maschenweite) vom Y-Rohr getrennt. Die über Aqua deion. gefilterte Luft wurde mittels Aquariumpumpen in die Proberohre eingeleitet und gelangte von dort direkt weiter in das Y-Rohr.

Als Stimulus dienten 380 mg des Extraktes aus Beispiel 1, die auf Filterpapier (30 x 45 mm) aufgetragen wurden. Dieser Stimulus wurde unter folgenden Bedingungen gegen reine Luft getestet:
Strömungsgeschwindigkeit 21 m/s, Lufttemperatur 25,5 +/- 0,5°C. Einzige Lichtquelle: Tageslichtlampe 50 cm über dem Kreuzungspunkt.

Testablauf: Jede Motte wurde an den Startpunkt des Olfaktometers gesetzt und 10 min. lang beobachtet. Zwei Verhaltensmuster wurden als Entscheidung gewertet: 1.) Das Tier hat ein Rohr bis zum Ende durchlaufen. 2.) Das Tier ist auf einer Seite doppelt so oft - mindestens jedoch 2 x - mindestens 3 cm vorgedrungen wie auf der anderen Seite. Vollkommen inaktive Tiere (keine Entscheidung) wurden in der Auswertung nicht berücksichtigt. Insgesamt wurden 18 Tiere getestet. 50% waren aktiv, d.h. sie trafen eine Entscheidung entsprechend den beschriebenen Kriterien. Nach jeweils 5 Tieren wurde das Glasrohr mit Aceton gereinigt und die Seiten für Stimulus und Kontrolle vertauscht.

Auswertung: Die Ergebnisse wurden in SPSS Version 6.0 mittels 2-seitigem Binomialtest ausgewertet. Nullhypothese: Beide Quellen (Stimulus und Kontrolle) sind gleich attraktiv bzw.
H₀:p(+)=p(-)=0,5. Die Ergebnisse sind in Tabelle 2 dargestellt und ergeben eine statistisch hochsignifikante Attraktivität des Blattextraktes auf weibliche Kastanienminiermotten gegenüber reiner Luft.

### 4. Stimulation der Eiablage

Experimentalkäfig: Für den Test wurden durchsichtige konische Dessertbecher aus PE (Höhe: 8 cm, Durchmesser Boden: 5,5 cm, Durchmesser Öffnung: 6,5 cm) benutzt. Der Boden wurde abgeschnitten und der resultierende Zylinder mit einem feinen Netz ausgekleidet. Die Öffnung mit kleinerem Durchmesser wurde mit demselben Netz abgeschlossen.

Oberflächen zur Eiablage: Grüne PE-Folien wurden in quadratische Stücke (15 cm Kantenlänge) geschnitten, über den Boden von Petrischalen (Durchmesser 9 cm) gespannt und mit einem Gummiband befestigt. Die derart vorbereiteten Folien wurden in einem Pottertower mit jeweils 1,5 ml einer 1:10-Verdünnung des in Beispiel 1 beschriebenen Extraktes mit Aqua deion. besprüht. Als Negativ-Kontrolle dienten Folien, die nur mit 1,5 ml Aqua deion. besprüht wurden. Positiv-Kontrolle waren unbefallene Blätter von Aesculus hippocastanum L.

In einen Experimentalkäfig entsprechend der obigen Beschreibung wurden 3 weibliche und 1 männliche Kastanienminiermotte gesetzt (Gewinnung wie in Beispiel 3) und der Käfig mit der Folie (behandelte Seite innenliegend) bzw. dem Kastanienblatt verschlossen (Befestigung mittels Gummiband). Die Kastanienblätter wurden durch Einhüllen der Schnittstelle in einen wassergetränkten Wattebausch versorgt. Die Motten erhielten als Versorgung eine 1%ige Zuckerlösung, welche über einen getränkten Wattebausch an der oberen Öffnung, außerhalb des Netzes, zur Verfügung gestellt wurde.

Ausgewertet wurde die Zahl der gelegten Eier nach 4 Tagen. Getestet wurden 4 Wiederholungen aller Varianten (+Kontrolle, -Kontrolle und behandelte Folie). Die Ergebnisse sind in Tabelle 3 beschrieben und ergaben eine den natürlichen Blättern entsprechende Eiablage-Stimulation durch den Extrakt, wogegen es ohne diesen Stimulus zu keinen Eiablagen kam.

**Tabelle 1:**

| Flüchtige Verbindungen aus Laubblättern von Aesculus hippocastanum L. (Hippocastanaceae): Ergebnisse der in Punkt 2) beschriebenen Analysen. Die Spalte "Analysemethode" gibt an, mit welcher der Methoden a) bis c) aus Punkt 2) die entsprechende Verbindung gefunden wurde. | | | |
|---|---|---|---|
| **Verbindung** | Summenformel | Retentionszeit (min) | Analyse-methode |
| Isoamylacetat | C7H1402 | 11,4 | a c |
| oder 2-Pentanolacetat | | | |
| Essigsäure-pentylester | C7H1402 | 12,7 | c |
| Hexansäure-methylester | C7H14O2 | 13,1 | c |
| 1-Pentanol | C5H120 | 13,7 | c |
| Hexansäureethylester | C8H1602 | 14,2 | c |
| 2-Hexen-1-ol-Acetat | C8H1402 | 16,7 | abc |
| 6-Methyl-Hept-5-en-2-on | C8H140 | 16,8 | a c |
| Essigsäure | C2H4O2 | 19,1 | abc |
| 3-Hexenylbutanoat | C10H18O2 | 19,3 | ab |
| 3-Hexenyl-2-Methyl-butanoat | C11H20O2 | 19,5 | ab |
| Benzaldehyd | C7H6O | 20,6 | c |
| beta-Pinen | C10H16 | 20,7 | b |
| (6,6-dimethyl-2-methylen-bicyclo[3.1.1]heptan) | | | |
| Hexansäurehexylester | C12H2402 | 21,7 | c |
| Trans-3-Caryophyllen | C15H24 | 21,8 | b |
| (4,11,11-trimethyl-8-methylen-bicyclo[7.2.0]undec-4-en) | | | |
| Hexansäurehexenylester | C12H22O2 | 22,4 | bc |
| beta-Farnesen | C15H24 | 22,4 | a |
| (7,11-dimethyl-3-methylen-dodeca-1,6,10-trien) | | | |
| Trans-2-Hexenylbutanoat | C10H18O2 | 22,5 | c |
| Geranylaceton II | C13H220 | 24,7 | ab |
| (5,6-Undecadien-2-on) | | | |
| Benzenmethanol | C7H8O | 25,0 | c |
| Benzenethanol | C8H100 | 25,4 | bc |
| Hexanal | C6H120 | 10,4 | abc |
| 3-Hexenal | C6H100 | 12,0 | ab |
| 2-Penten-1-ol | C5H10O | 12,5 | abc |
| 2-Hexenal | C6H100 | 14,0 | abc |
| Essigsäurehexylester | C8H16O2 | 15,2 | abc |
| Cis-3-Hexenylacetat | C8H14O2 | 16,3 | abc |
| 1-Hexanol | C6H14O | 17,2 | abc |
| 3-Hexen-1-ol | C6H12O | 17,9 | abc |
| 4-Hexen-3-on | C7H12O | 21,6 | b |
| oder 3,4-Dihydro-Pyran-2-Carboxaldehyd | oder C6H8O2 | | |
| oder 5,6-Dihydro-Pyran-2-Carboxaldehyd | oder C6H8O2 | | |
| 1-Hepten-3-ol | C7H14O | 25,8 | ab |
| oder 2-Penten-1-ol | oder C5H10O | | |
| 1H-Imidazol | C3H4N2 | 29,2 | abc |
| oder 1H-Pyrazol | | | |

**Tabelle 2:**

| Ergebnisse der Olfaktometer-Tests mit weiblichen Kastanienminiermotten. Entscheidungen für Stimulus bzw. reine Luft entsprechend den Kriterien in Punkt 3 steht in Spalte "N". Die exakte Signifikanz entsprechend zweiseitigem Binomialtest zeigt hochsignifikante Bevorzugung des Stimulus. Weitere Details siehe Punkt 3. | | | | |
|---|---|---|---|---|
| | N | beobachteter Anteil | Testanteil | exakte Signifikanz |
| Stimulus | 9 | 1,00 | 0,50 | 0,004 |
| reine Luft | 0 | 0,00 | | |

**Tabelle 3:**

| Ergebnisse der Eiablage-Stimulation: Mittelwert und Standardabweichung der pro Weibchen abgelegten Eier. Details zur Versuchsanordnung siehe Punkt 4. | | | |
|---|---|---|---|
| | Positiv-Kontrolle | behandelte Folie | negativ-Kontrolle |
| Mittelwert (n=12) | 8,50 | 11,00 | 0,00 |
| Standardabweichung | 6,05 | 6,42 | 0,00 |

## Patentansprüche

1. Verwendung einer chemischen Zusammensetzung umfassend zumindest einen Inhaltsstoff aus einem Pflanzenteil einer Art der Gattung Aesculus als Lockstoff für Kastanienschädlinge.

2. Verwendung nach Anspruch 1, **dadurch gekennzeichnet, dass** das Pflanzenteil ein Laubblatt einer Art der Gattung Aesculus ist.

3. Verwendung nach Anspruch 1 oder 2, **dadurch gekennzeichnet, dass** die Art der Gattung Aesculus Aesculus hippocastanum L. ist.

4. Verwendung nach einem der Ansprüche 1 bis 3, **dadurch gekennzeichnet, dass** die chemische Zusammensetzung Extrakt des Pflanzenteils umfasst.

5. Verwendung nach einem der Ansprüche 1 bis 3, **dadurch gekennzeichnet, dass** die chemische Zusammensetzung flüchtige Verbindungen des Pflanzenteils umfasst.

6. Verwendung nach einem der Ansprüche 1 bis 5, **dadurch gekennzeichnet, dass** die chemische Zusammensetzung einen oder mehrere Substanzen ausgewählt aus der Gruppe bestehend aus Isoamylacetat oder 2-Pentanolacetat, Essigsäure-pentylester, Hexansäure-methylester, 1-Pentanol, Hexansäureethylester, 2-Hexen-1-ol-Acetat, 6-Methyl-Hept-5-en-2-on, Essigsäure, 3-Hexenylbutanoat, 3-Hexenyl-2-Methyl-butanoat, Benzaldehyd, beta-Pinen (6,6-dimethyl-2-methylen-bicyclo [3.1.1]heptan), Hexansäurehexylester, Trans-3-Caryophyllen (4,11,11-trimethyl-8-methylen-bicyclo[7.2.0]undec-4-en, Hexansäurehexenylester, beta-Farnesen (7,11-dimethyl-3-methylen-dodeca-1,6,10-trien), Trans-2-Hexenylbutanoat, Geranylaceton II (5,6-Undecadien-2-on), Benzenmethanol, Benzenethanol, Hexanal, 3-Hexenal, 2-Peneten-1-ol, 2-Hexenal, Essigsäurehexylester, Cis-3-Hexenylacetat, 1-Hexanol, 3-Hexen-1-ol, 1,4-Hexadien, 4-Hexen-3-on oder 3,4-Dihydro-Pyran-2-Carboxaldehyd oder 5,6-Dihydro-Pyran-2-Carboxaldehyd, 1-Hepten-3-ol oder 2-Penten-1-ol, 1H-Imidazol umfasst.

7. Verwendung nach einem der Ansprüche 1 bis 6, **dadurch gekennzeichnet, dass** die chemischen Zusammensetzung weiters Klebstoff umfasst.

8. Verwendung nach einem der Ansprüche 1 bis 7, **dadurch gekennzeichnet, dass** die chemischen Zusammensetzung weitere Lockstoffe, insbesondere Pheromone, umfasst.

9. Verwendung nach einem der Ansprüche 1 bis 8, **dadurch gekennzeichnet, dass** die chemischen Zusammensetzung weiters Insekten-Regulatoren, vorzugsweise Insektizide, umfasst.

10. Verwendung nach einem der Ansprüche 1 bis 9, **dadurch gekennzeichnet, dass** der Kastanienschädling Cameraria ohridella ist.

11. Verwendung nach einem der Ansprüche 1 bis 10 als Lockstoffe für weibliche Kastanienschädlinge.

12. Verwendung nach einem der Ansprüche 1 bis 11 in einer Massenfangfalle für Kastanienschädlinge.

13. Verwendung nach einem der Ansprüche 1 bis 12, **dadurch gekennzeichnet, dass** die chemische Zusammensetzung auf einem geeigneten Träger, vorzugsweise hergestellt aus Zellulosefasern, Glasfasern, natürlichen oder synthetischen Polymeren bzw. Metallverbindungen, aufgebracht wird.

14. Vorrichtung zum Anlocken von Kastanienschädlingen, insbesondere von Cameraria ohridella, **dadurch gekennzeichnet, dass** sie einen Träger umfasst, auf dem eine chemische Zusammensetzung wie in einem der Ansprüche 1 bis 9 definiert aufgebracht ist.

15. Massenfangfalle umfassend eine Vorrichtung nach Anspruch 14.

16. Dispenser, umfassend eine Zusammensetzung nach einem der Ansprüche 1 bis 9.

17. Verfahren zum Schutz vor Befall von Bäumen durch Kastanienschädlinge, vorzugsweise von Arten der Gattung Aesculus, besonders bevorzugt von Aesculus hippocastanum L., **dadurch gekennzeichnet, dass** eine chemische Zusammensetzung wie in einem der Ansprüche 1 bis 9 definiert bzw. eine Vorrichtung nach Anspruch 14 bzw. eine Massenfangfalle nach Anspruch 15 oder eines Dispensers nach Anspruch 16 in der Nähe des jeweiligen Baumes, vorzugsweise um dessen Stamm herum, vorgesehen wird.
